# EUROPÄISCHE PATENTANMELDUNG

(11) **EP 1 526 310 A1**
(43) Veröffentlichungstag der Anmeldung: **27.04.2005**
(21) Anmeldenummer: 04004161.8
(22) Anmeldetag: 25.02.2004
(51) Int. Cl.: F16J 15/32

(54) **Dichtungsanordnung**

(30) Priorität: 29.07.2003 DE 10334896
(71) Anmelder: Carl Freudenberg KG, 69469 Weinheim (DE)
(72) Erfinder: Prem, Erich, 69502 Hemsbach (DE); Naszek, Attila, 6000 Kecskemet (HU); Vogt, Rolf, 68723 Oftersheim (DE)

(57) **Zusammenfassung**

Dichtungsanordnung, umfassend einen Radialwellendichtring (1), der die abzudichtende Oberfläche (2) eines abzudichtenden Maschinenelements (3) mit zumindest einer sich im Wesentlichen parallel zur abzudichtenden Oberfläche (2) erstreckenden Dichtmanschette (4) dichtend berührt, wobei die abzudichtende Oberfläche (2) im Bereich der Dichtmanschette (4) des Radialwellendichtrings (1) zumindest eine zumindest teilweise wendelförmige Oberflächenprofilierung (5) aufweist, die für das abzudichtende Medium (6) zumindest einen Rückförderdrall (7) in Richtung des abzudichtenden Raums (8) bildet, wobei die Dichtmanschette (4) auf der der Oberflächenprofilierung (5) radial zugewandten Seite glattflächig ausgebildet ist und wobei die Dichtmanschette (4), im Längsschnitt der Dichtungsanordnung betrachtet, die Oberflächenprofilierung (5) glattflächig überdeckt.

## Beschreibung

Die Erfindung betrifft eine Dichtungsanordnung.

### Stand der Technik

Dichtungsanordnungen sind allgemein bekannt, beispielsweise aus der DE 197 21 692 A1. Die vorbekannte Dichtungsanordnung umfasst eine abzudichtende Oberfläche eines rotationssymmetrischen Maschinenelements und einen Radialwellendichtring, dessen aus elastomerem Werkstoff bestehende Dichtlippe die Oberfläche mit einer Dichtkante berührt, die durch zwei einander durchschneidende Kegelflächen gebildet ist, wobei die dem abzudichtenden Raum zugewandte erste Kegelfläche mit der Rotationsachse einen steileren Kegelwinkel einschließt, als die davon abgewandte zweite Kegelfläche. In die abzudichtende Oberfläche ist eine wendelförmig verlaufende Nut eingedreht. Durch die eingedrehte Nut in der abzudichtenden Oberfläche und dadurch, dass der Radialwellendichtring aus einem elastomeren Werkstoff besteht und eine Dichtkante der beschriebenen Geometrie aufweist, vermag der Radialwellendichtring der vorbekannten Dichtungsanordnung, unabhängig von der Drehrichtung des Maschinenelements, die zur Schmierung der Dichtkante erforderlichen Volumina abzudichtenden Mediums in den abzudichtenden Raum zurückzufördern.

Eine weitere Dichtungsanordnung ist aus der DE 101 17 881 A1 bekannt. Die vorbekannte Dichtungsanordnung umfasst einen Radialwellendichtring mit einem Stützring aus zähhartem Werkstoff, an dem ein Dichtkörper unlösbar befestigt ist. Der Dichtkörper umfasst eine axial in Richtung einer abzudichtenden Welle vorgewölbte, elastisch deformierbare Dichtlippe, die auf der der abzudichtenden Oberfläche zugewandten Seite eine Oberflächenprofilierung aufweist, die bei bestimmungsgemäßer Verwendung des Radialwellendichtrings unter radialer Vorspannung an die Welle dichtend anlegbar ist und bei Rotation der Welle eine Rückförderung von Leckageflüssigkeit in den abzudichtenden Raum bewirkt.

### Darstellung der Erfindung

Der Erfindung liegt die Aufgabe zu Grunde, eine Dichtungsanordnung derart weiter zu entwickeln, dass diese verbesserte Gebrauchseigenschaften während einer längeren Gebrauchsdauer aufweist. Die verbesserten Gebrauchseigenschaften während einer längeren Gebrauchsdauer sollen insbesondere dadurch erzielt werden, das abrasiver Verschleiß am Radialwellendichtring auf ein Minimum reduziert und die Bildung von Ölkohle an der Dichtlippe des Radialwellendichtrings vermieden werden soll.

Diese Aufgabe wird erfindungsgemäß durch die Merkmale von Anspruch 1 gelöst. Auf vorteilhafte Ausgestaltung nehmen die Unteransprüche Bezug.

Zur Lösung der Aufgabe ist eine Dichtungsanordnung vorgesehen, umfassend einen Radialwellendichtring, der die abzudichtende Oberfläche eines abzudichtenden Maschinenelements mit einer zumindest sich im Wesentlichen parallel zur abzudichtenden Oberfläche erstreckenden Dichtmanschette dichtend berührt, wobei die abzudichtende Oberfläche im Bereich der Dichtmanschette des Radialwellendichtrings zumindest eine zumindest teilweise wendelförmige Oberflächeprofilierung aufweist, die für das abzudichtende Medium zumindest einen Rückförderdrall in Richtung des abzudichtenden Raums bildet, wobei die Dichtmanschette auf der der Oberflächenprofilierung radial zugewandten Seite glattflächig ausgebildet ist und wobei die Dichtmanschette, im Längsschnitt der Dichtungsanordnung betrachtet, die Oberflächenprofilierung glattflächig überdeckt. Im Gegensatz zu Radialwellendichtringen, die Dichtkanten aufweisen, die durch einander durchschneidende Kegelflächen begrenzt sind, weist eine Dichtmanschette, die die abzudichtende Oberfläche glattflächig berührt, eine erhöhte Lebensdauer und dadurch bessere Gebrauchseigenschaften während einer längeren Gebrauchsdauer auf. Speziell dann, wenn die abzudichtende Oberfläche eine Oberflächenprofilierung aufweist, ist der abrasive Verschleiß einer glattflächigen Dichtmanschette, bezogen auf einen Radialwellendichtring mit einer Dichtkante, wesentlich reduziert. Außerdem ist von Vorteil, dass die Oberflächenprofilierung einen Bestandteil des abzudichtenden Maschinenelements bildet und nicht einen Bestandteil der Dichtmanschette. Befindet sich die Oberflächenprofilierung im abzudichtenden Maschinenelement, ist die Wärmeabfuhr, bezogen auf eine Oberflächenprofilierung in der Dichtmanschette, wesentlich günstiger. Außerdem kann die Oberflächenprofilierung in der abzudichtenden Oberfläche bei gleicher Rückförderleistung wesentlich schwächer ausgeprägt sein, als in der der abzudichtenden Oberfläche zugewandten Seite einer profilierten Dichtmanschette. Die sehr vorteilhaften Gebrauchseigenschaften der erfindungsgemäßen Dichtungsanordnung sind demnach darauf zurück zu führen, dass eine Dichtmanschette zur Anwendung gelangt, dass der Rückförderdrall einen Bestandteil der abzudichtenden Oberfläche bildet und dass die Dichtmanschette auf der der Oberflächenprofilierung zugewandten Seite glattflächig ausgebildet ist. Ölkohleablagerungen sind bei der erfindungsgemäßen Dichtungsanordnung sicher ausgeschlossen, da die Dichtmanschette auf der der abzudichtenden Oberfläche zugewandten Seite glattflächig ausgebildet ist und die Oberflächenprofilierung in der abzudichtenden Oberfläche mit einer schwächer ausgeprägten Drallstruktur für eine ausreichende Rückförderung des abzudichtenden Mediums in den abzudichtenden Raum auskommt. Die Wärmeabfuhr ist im abzudichtenden Maschinenelement so gut, dass ein Verkoken des abzudichtenden Mediums in diesem Bereich nahezu ausgeschlossen ist.

Gemäß einer vorteilhaften Ausgestaltung kann es vorgesehen sein, dass die Dichtmanschette aus PTFE besteht. Dichtmanschetten aus PTFE haben den Vorteil guter Notlaufeigenschaften bei eventuell auftretender Mangelschmierung. Mit zunehmender Gebrauchsdauer glasiert die Oberfläche der Dichtmanschette, die die abzudichtende Oberfläche des abzudichtenden Maschinenelements anliegend und dichtend umschließt und wird dadurch sehr widerstandsfähig. Abrasiver Verschleiß ist dadurch auf Minimum reduziert. Ein weiterer Vorteil einer aus PTFE bestehenden Dichtmanschette ist darin zu sehen, dass eine ausreichende radiale Anpressung auf der abzudichtenden Oberfläche des abzudichtenden Maschinenelements auch ohne zusätzliche Federelemente, wie beispielsweise eine Ringwendelfeder, erreicht wird.

Nach einer anderen Ausgestaltung kann die Dichtmanschette aus einem elastomeren Werkstoff bestehen. Bei einer Dichtmanschette aus elastomerem Werkstoff ist von Vorteil, dass dadurch die gesamte Dichtungsanordnung einfach und kostengünstig herstellbar ist, da die Anbindung elastomerer Werkstoffe, beispielsweise an einen Stützkörper aus metallischem Werkstoff und/oder andere elastomere Werkstoffe, problemlos ist.

Das abzudichtende Maschinenelement kann beispielsweise durch eine Welle gebildet sein. Die Dichtmanschette umschließt dann die abzudichtende Oberfläche der Welle unmittelbar anliegend.

Nach einer anderen Ausgestaltung kann das abzudichtende Maschinenelement durch einen Laufring gebildet sein, der drehfest mit einer Welle verbunden ist. Der Laufring und der Radialwellendichtring können Bestandteil einer Kassettendichtung sein, wobei der Vorteil von Kassettendichtungen hauptsächlich darin zu sehen ist, dass es einer speziellen Bearbeitung der Oberfläche der Welle, auf der der Laufring montiert ist, nicht Bedarf. Die gesamte Dichtungsanordnung ist dadurch einfach und kostengünstig herstellbar, auch deshalb, weil das Aufbringen einer geeigneten Gegenlauffläche für den Radialwellendichtring auf Laufringen technisch einfacher ist, als auf der Oberfläche einer abzudichtenden Welle.

Die Oberflächenprofilierung ist unter Vorschub spanabhebend erzeugt. Generell können unterschiedliche mechanische Bearbeitungsverfahren zur Herstellung der Gegenlauffläche für den Radialwellendichtring zur Anwendung gelangen. Bevorzugt gelangt eine mechanische Bearbeitung mit Vorschub, wie zum Beispiel Drehen oder Schleifen mit Vorschub zur Anwendung, da sich bei solchen Herstellungsverfahren nahezu selbsttätig ein Rückförderdrall in Richtung des abzudichtenden Raums ergibt.

Die Dichtmanschette kann in Richtung des abzudichtenden Raums oder entgegen dem abzudichtenden Raum in Richtung Umgebung vorgewölbt sein. Eine in Richtung des abzudichtenden Raums vorgewölbte Dichtmanschette gelangt dann zur Anwendung, wenn vorzugsweise ein geringer Überdruck im abzudichtenden Raum anliegt, die Trennung Staubschutz/Dichtlippe notwendig ist und die Montage diese Anwendung zulässt.

Demgegenüber gelangt eine Dichtmanschette, die entgegen dem abzudichtenden Raum in Richtung der Umgebung vorgewölbt ist, zur Anwendung, wenn wenig Bauraum in axialer Richtung zur Verfügung steht, wenn die Dichtlippe gleichzeitig auch als Staublippe benutzt werden muss und/oder wenn vorzugsweise Unterdruck im abzudichtenden Raum anliegt und/oder die Dichtung nicht anders montiert werden kann.

Die abzudichtende Oberfläche kann sich in axialer Richtung und/oder in radialer Richtung erstrecken. In den meisten Anwendungsfällen wird sich die abzudichtende Oberfläche in axialer Richtung erstrecken, beispielsweise wenn die abzudichtende Oberfläche einen Bestandteil einer Welle bildet und wenn die Dichtmanschette die sich in axialer Richtung erstreckende abzudichtende Oberfläche unter radialer Vorspannung dichtend umschließt. Sollen demgegenüber beispielsweise radiale Wellenabsätze abgedichtet werden oder Radialvorsprünge eines Laufrings, erstrecken sich die abzudichtenden Oberflächen in radialer Richtung.

### Kurzbeschreibung der Zeichnungen

Acht Ausführungsbeispiele werden nachfolgend anhand der Figuren 1 bis 8 näher beschrieben. Diese zeigen jeweils in schematischer Darstellung:
- Figur 1: Ein erstes Ausführungsbeispiel, mit einer Dichtmanschette aus elastomerem Werkstoff,
- Figur 2: ein zweites Ausführungsbeispiel, ähnlich dem Ausführungsbeispiel aus Figur 1, wobei die Dichtmanschette aus PTFE besteht,
- Figur 3: ein drittes Ausführungsbeispiel mit zwei Dichtmanschetten aus elastomerem Werkstoff, wobei sich eine der abzudichtenden Oberflächen in axialer und eine der abzudichtenden Oberflächen in radialer Richtung erstreckt,
- Figur 4: ein viertes Ausführungsbeispiel, ähnlich dem Ausführungsbeispiel aus Figur 3, wobei eine der Dichtmanschetten aus PTFE besteht,
- Figur 5: ein fünftes Ausführungsbeispiel, mit einer Dichtmanschette und einer Vorschaltdichtung,
- Figur 6: ein sechstes Ausführungsbeispiel, bei dem die aus PTFE bestehende Dichtmanschette in Richtung der Umgebung vorgewölbt ist,
- Figur 7: ein siebtes Ausführungsbeispiel, ähnlich dem Ausführungsbeispiel aus Figur 6, wobei die Dichtmanschette aus einem elastomeren Werkstoff besteht und
- Figur 8: ein achtes Ausführungsbeispiel, ähnlich dem Ausführungsbeispiel aus Figur 5, wobei die sich in radialer Richtung erstreckende abzudichtende Oberfläche durch einen Wellenabsatz gebildet ist.

### Ausführung der Erfindung

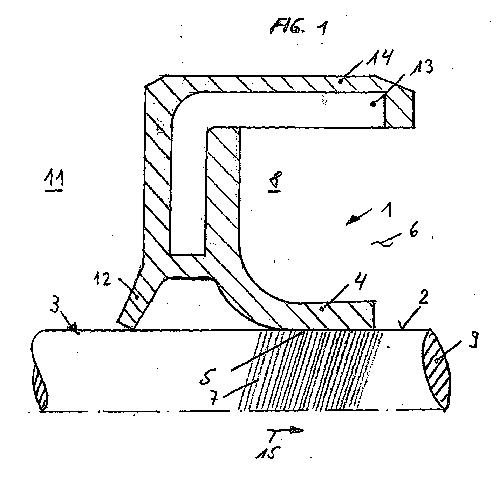

In den Figuren 1 bis 8 ist jeweils eine Dichtungsanordnung gezeigt, die einen Radialwellendichtring 1 umfasst. Der Radialwellendichtring 1 weist jeweils zumindest eine Dichtmanschette 4 auf, die sich im Wesentlichen parallel zur abzudichtenden Oberfläche 2 erstreckt und diese dichtend berührt. Die Förderrichtung des abzudichtenden Mediums 6 in Richtung des abzudichtenden Raums 8 durch den Rückförderdrall 7 ist mit dem Bezugszeichen 15 bezeichnet.

Die abzudichtende Oberfläche 2 hat jeweils im Bereich der Dichtmanschette 4 eine wendelförmige Oberflächenprofilierung 5, die in den hier gezeigten Ausführungsbeispielen durch Schleifen oder Drehen erzeugt ist. Durch die Oberflächenprofilierung 5 wird für das abzudichtende Medium 6 ein Rückförderdrall 7 in Richtung des abzudichtenden Raums 8 gebildet. Zur Erzielung guter Gebrauchseigenschaften während einer langen Gebrauchsdauer, insbesondere dadurch, dass der abrasive Verschleiß der Dichtmanschette auf ein Minimum reduziert ist, ebenso wie die Bildung von Ölkohle, ist es in jedem dieser Ausführungsbeispiele vorgesehen, dass die Dichtmanschette 4 auf der der Oberflächenprofilierung 5 radial zugewandten Seite glattflächig ausgebildet ist, wobei die Dichtmanschette 4, im Längsschnitt der Dichtungsanordnung betrachtet, die Oberflächenprofilierung 5 glattflächig überdeckt.

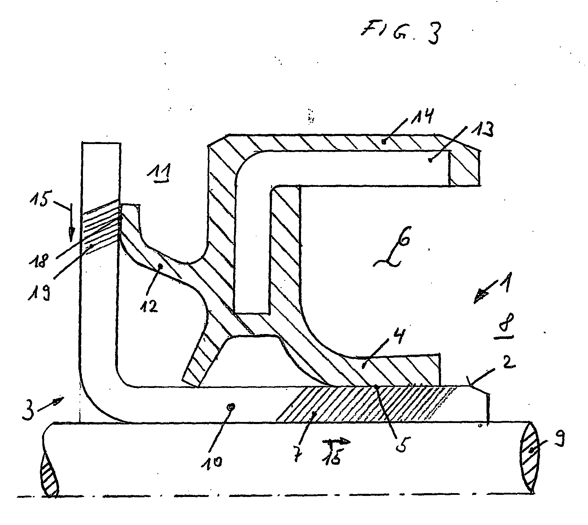

In den Ausführungsbeispielen gemäß der Figuren 1, 2, 6, 7 und 8 ist das abzudichtende Maschinenelement 3 jeweils durch eine Welle 9 gebildet, in den Ausführungsbeispielen gemäß der Figuren 3, 4 und 5 demgegenüber durch einen Laufring 10, der drehfest mit einer Welle 9 verbunden ist.

In Figur 1 ist das erste Ausführungsbeispiel einer erfindungsgemäßen Dichtungsanordnung gezeigt. Der Radialwellendichtring 1 umfasst einen Stützkörper 13, an dem die Dichtmanschette 4 und eine Vorschaltdichtung 12 festgelegt sind. Sowohl die Dichtmanschette 4 als auch die Vorschaltdichtung 12 bestehen aus einem übereinstimmenden elastomeren Werkstoff und sind einstückig ineinander übergehend ausgebildet. Darüber hinaus ist der Stützkörper 13 außenumfangsseitig von einer statisch beanspruchten Dichtung 14 umschlossen, mittels der der Radialwellendichtring 1 dichtend in einem hier nicht dargestellten Gehäuse montiert ist. Auch die statisch beanspruchte Dichtung 14 besteht aus elastomerem Werkstoff und ist einstückig ineinander übergehend sowohl mit der Dichtmanschette 4 als auch mit der Vorschaltdichtung 12 ausgebildet. Die Dichtmanschette 4 ist in Richtung des abzudichtenden Raums 8 vorgewölbt.

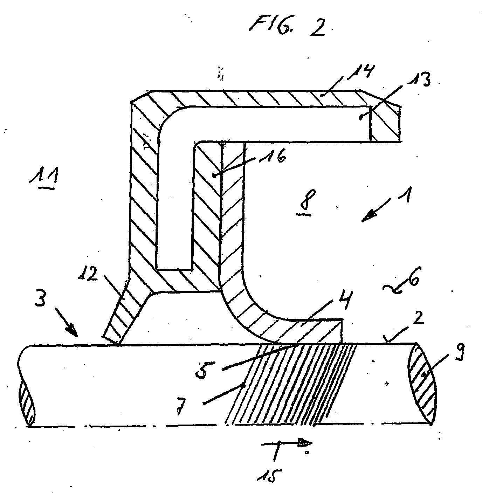

In Figur 2 ist ein zweites Ausführungsbeispiel der erfindungsgemäßen Dichtungsanordnung gezeigt, ähnlich dem Ausführungsbeispiel aus Figur 1. Der wesentliche Unterschied besteht im Werkstoff, aus dem die Dichtmanschette 4 besteht. In Figur 2 besteht die Dichtmanschette 4 aus PTFE und ist mittels einer Zwischenschicht 16 aus elastomerem Werkstoff mit dem Stützkörper 13 verbunden.

In Figur 3 ist ein drittes Ausführungsbeispiel einer Dichtungsanordnung gezeigt, bei dem die Vorschaltdichtung 12 in Richtung der Umgebung 11 vorgewölbt und auf einer weiteren Oberflächenprofilierung 18 abgestützt ist, die einen weiteren Rückförderdrall 19 bildet. Die Förderrichtung 15 des abzudichtenden Mediums 6 erfolgt sowohl durch den Rückförderdrall 7 als auch durch den weiteren Rückförderdrall 19 jeweils in Richtung des abzudichtenden Raums 8.

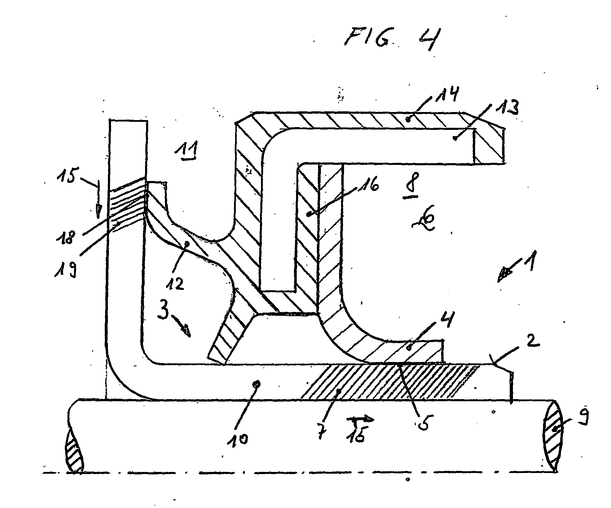

Figur 4 unterscheidet sich von Figur 3 hauptsächlich dadurch, dass die Dichtmanschette 4 aus PTFE und nicht, wie in Figur 3, aus elastomerem Werkstoff besteht.

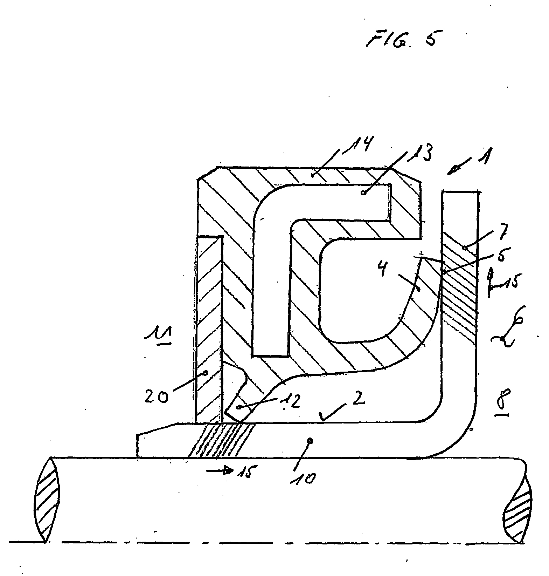

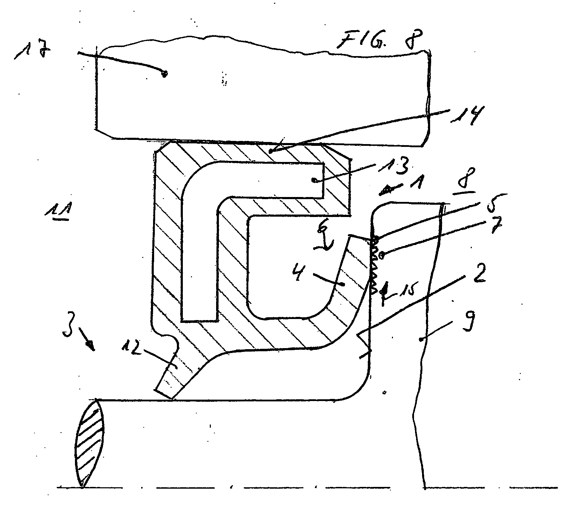

In Figur 5 ist ein fünftes Ausführungsbeispiel gezeigt, das auf der dem abzudichtenden Raum 8 abgewandten Seite der Vorschaltdichtung 12 eine Staubdichtung 20 aufweist, die als Vliesstoffscheibe ausgebildet ist. Durch die Staubdichtung 20 werden Staubpartikel aus der Umgebung von der Dichtmanschette 4 zurück gehalten. Die Vorschaltdichtung 12 bildet einen weiteren Schutz für die Dichtmanschette 4. Die in diesem Ausführungsbeispiel gezeigte Dichtungsanordnung weist, ebenso wie die Dichtungsanordnung aus Figur 8, gute Gebrauchseigenschaften während einer besonders langen Gebrauchsdauer auf, da als Schwebeteilchen vorhandene Feststoffkörper, die sich im abzudichtenden Medium 6 innerhalb des abzudichtenden Raums befinden können oder von der Umgebung 11 an der Staubdichtung 20 und der Vorschaltdichtung 12 vorbei gelangen, sich im Wesentlichen schwerkraftbedingt absetzen und dadurch zuverlässig von der sich radial nach außen erstreckende Dichtmanschette 4 fern gehalten werden.

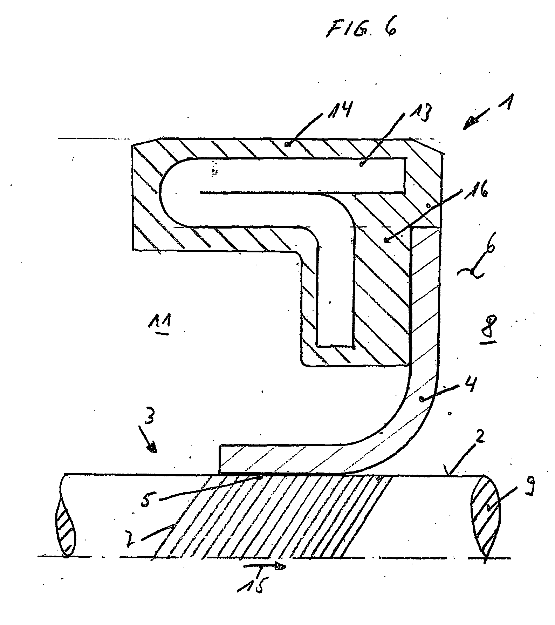

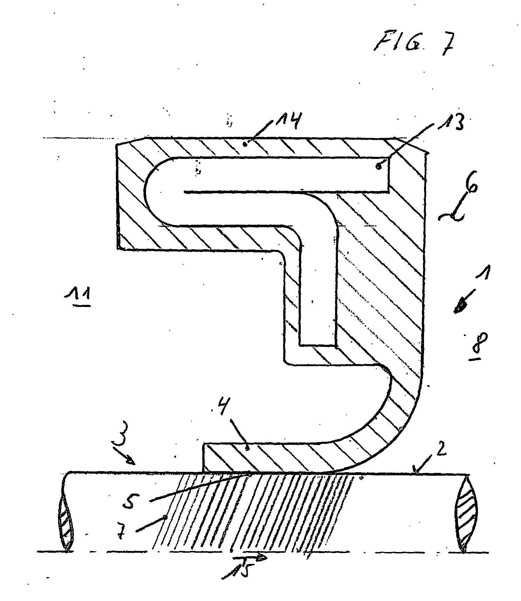

Die Ausführungsbeispiele aus den Figuren 6 und 7 zeichnen sich dadurch aus, dass die Dichtmanschette 4 jeweils in Richtung Umgebung 11 vorgewölbt ist. Wie zuvor bereits beschrieben, ist durch die in Richtung Umgebung 11 vorgewölbte Dichtmanschette 4 von Vorteil, dass diese einfach und beschädigungsfrei montierbar ist, dass ein Unterdruck im Aggregat die Lippe nicht zum Abheben bringt und die Dichtmanschette auch als Staubschutz fungiert.

In Figur 8 ist ein achtes Ausführungsbeispiel gezeigt, ähnlich dem Ausführungsbeispiel aus Figur 5, wobei das abzudichtende Maschinenelement 3 hier nicht durch einen Laufring sondern durch einen radialen Absatz der Welle 9 gebildet ist. Der Radialwellendichtring 1 ist mittels der statsich beanspruchten Dichtung 14 dichtend im Gehäuse 17 angeordnet.

## Patentansprüche

1. Dichtungsanordnung, umfassend einen Radialwellendichtring (1), der die abzudichtende Oberfläche (2) eines abzudichtenden Maschinenelements (3) mit zumindest einer sich im Wesentlichen parallel zur abzudichtenden Oberfläche (2) erstreckenden Dichtmanschette (4) dichtend berührt, wobei die abzudichtende Oberfläche (2) im Bereich der Dichtmanschette (4) des Radialwellendichtrings (1 ) zumindest eine zumindest teilweise wendelförmige Oberflächenprofilierung (5) aufweist, die für das abzudichtende Medium (6) zumindest einen Rückförderdrall (7) in Richtung des abzudichtenden Raums (8) bildet, wobei die Dichtmanschette (4) auf der der Oberflächenprofilierung (5) radial zugewandten Seite glattflächig ausgebildet ist und wobei die Dichtmanschette (4), im Längsschnitt der Dichtungsanordnung betrachtet, die Oberflächenprofilierung (5) glattflächig überdeckt.

2. Dichtungsanordnung nach Anspruch 1, **dadurch gekennzeichnet, dass** die Dichtmanschette (4) aus PTFE besteht.

3. Dichtungsanordnung nach Anspruch 1, **dadurch gekennzeichnet, dass** die Dichtmanschette (4) aus einem elastomeren Werkstoff besteht.

4. Dichtungsanordnung nach einem der Ansprüche 1 bis 3, **dadurch gekennzeichnet, dass** das abzudichtende Maschinenelement (3) durch eine Welle (9) gebildet ist.

5. Dichtungsanordnung nach einem der Ansprüche 1 bis 3, **dadurch gekennzeichnet, dass** das abzudichtende Maschinenelement (3) durch einen Laufring (10) gebildet ist, der drehfest mit einer Welle (9) verbunden ist.

6. Dichtungsanordnung nach einem der Ansprüche 1 bis 5, **dadurch gekennzeichnet, dass** die Oberflächenprofilierung (5) unter Vorschub spanabhebend erzeugt ist.

7. Dichtungsanordnung nach einem der Ansprüche 1 bis 6, **dadurch gekennzeichnet, dass** die Dichtmanschette (4) in Richtung des abzudichtenden Raums (8) vorgewölbt ist.

8. Dichtungsanordnung nach einem der Ansprüche 1 bis 6, **dadurch gekennzeichnet, dass** die Dichtmanschette (4) entgegen dem abzudichtenden Raum (8) in Richtung Umgebung (11) vorgewölbt ist.

9. Dichtungsanordnung nach einem der Ansprüche 1 bis 8, **dadurch gekennzeichnet, dass** sich die abzudichtende Oberfläche (2) in axialer Richtung erstreckt.

10. Dichtungsanordnung nach einem der Ansprüche 1 bis 9, **dadurch gekennzeichnet, dass** sich die abzudichtende Oberfläche (2) in radialer Richtung erstreckt.
